# FASCICULE DE BREVET EUROPEEN

(11) **EP 3 501 125 B1**
(45) Date de publication et mention de la délivrance du brevet: **23.06.2021**
(21) Numéro de dépôt: 17768170.7
(22) Date de dépôt: 11.08.2017
(51) Int. Cl.: H04H 60/11

(54) **PROCÉDÉ DE SYNCHRONISATION DE DEUX FLUX DE DONNÉES AINSI QUE MISE EN OEUVRE DE CE PROCÉDÉ DANS UN RÉCEPTEUR**
VERFAHREN ZUR SYNCHRONISATION VON ZWEI DATENSTRÖMEN SOWIE ANWENDUNG DIESES VERFAHRENS IM RAHMEN EINES EMPFÄNGERS
METHOD OF SYNCHRONISATION OF TWO DATA STREAMS AND IMPLEMENTATION OF THIS METHOD IN A RECEIVER

(30) Priorité: 19.08.2016 FR 1657835
(43) Date de publication de la demande: 26.06.2019
(73) Titulaire: TDF, 92120 Montrouge (FR)
(72) Inventeur: VINCENT, David, 35150 Amanlis (FR); FAGUE, Dimitri, 75012 Paris (FR)
(74) Mandataire: Plasseraud IP
(86) Numéro de dépôt international: PCT/FR2017/052233
(87) Numéro de publication internationale: WO 2018/033683

(56) Documents cités:
- EP-A1- 2 071 749
- DE-A1-102012 221 791
- US-A1- 2011 064 049

## Description

La présente invention concerne le domaine de la diffusion de flux audio ou vidéo, et plus particulièrement la synchronisation de flux issus de sources différentes.

Elle trouve des applications dans les terminaux de réception audio ou vidéo, notamment les terminaux aptes à recevoir des données audio ou vidéo transportées selon des technologies distinctes.

Il est actuellement possible de basculer entre deux émissions FM, pour « *Frequency Modulation* » en anglais, ou entre une diffusion FM (de type *« Radio Data System* » RDS/FM synchrone) et une diffusion en Radio Numérique Terrestre RNT (normes DAB pour « *Digital Audio Broadcasting* » ou DMB pour « *Digital Multimedia Broadcasting* »).

Il est ainsi requis que les flux audio soient synchronisés (basculement FM/FM) ou avec des décalages faibles et constants (basculement FM/RNT).

En outre, il est désormais possible d'écouter une radio en streaming IP (pour « Internet Protocol ») sur des terminaux disposant en outre d'une connexion à un réseau IP, via une interface Wi-Fi ou réseau mobile 3G ou 4G par exemple. Un tel mode de transmission de flux audio requiert l'utilisation d'une mémoire tampon ou buffer dans le terminal récepteur, ce qui engendre un délai dans la réception de la radio.

De nouveaux modes de streaming de type HLS (« *HTTP Live Streaming* »), HSS (« *Home Subscriber Service* ») et DASH (« *Dynamic Adaptive Streaming over HTTP* ») reposent sur l'utilisation de petits fichiers de quelques secondes de données audio, appelés « *chunks* » ou morceaux, ce qui engendre un décalage variable avec les données diffusées en direct via RNT ou FM, en fonction du moment de connexion de l'utilisateur.

Ainsi, l'écoute d'une radio via un streaming IP utilisant des chunks introduit l'utilisation de buffers de tailles variables.

De plus, il n'est à l'heure actuelle pas possible de synchroniser ce flux radio IP avec une diffusion FM ou RNT.

Ainsi, le basculement entre un mode de diffusion RNT ou FM et un streaming IP se traduit par un décalage audio de quelques secondes. Un tel décalage peut consister en une perte de quelques secondes (streaming IP vers diffusion FM ou RNT) ou une répétition de quelques secondes (diffusion FM ou RNT vers streaming IP).

De plus, un basculement d'un mode de diffusion vers un streaming IP et inversement peut poser problème lorsque le contenu diffusé en RNT ou FM est spécifique à la zone de réception (programme d'une radio locale par exemple), ce qui n'est pas le cas d'un streaming IP.

Les contenus des programmes diffusés en RNT ou FM et de ceux transportés par streaming IP sont donc différents, et un basculement entre un mode de diffusion radiofréquences et un streaming IP ne peut être transparent pour l'utilisateur. Le document EP2071749 divulgue un système pour synchroniser un flux de données étant reçu par diffusion radiofréquence et un autre flux étant reçu via un réseau IP, les premier et deuxième flux transportant un même service, utilisant deux mémoires de stockage pour stocker temporairement les deux flux, ainsi qu'une unité pour combiner les deux flux pour rendre un flux à la sortie.

La présente invention vient améliorer la situation.

Un premier aspect de l'invention concerne un procédé de synchronisation d'un premier flux de données et d'un deuxième flux de données mis en œuvre dans un récepteur, au moins un flux parmi le premier flux et le deuxième flux étant reçu par diffusion radiofréquence et l'autre flux étant reçu via un réseau IP, les premier et deuxième flux transportant un même service, le procédé comprenant :
- réception d'une valeur de décalage moyen entre le premier flux et le deuxième flux ;
- stockage du premier flux dans une première mémoire tampon et stockage du deuxième flux dans une deuxième mémoire tampon ;
- extraction d'un premier extrait de la première mémoire tampon et d'un deuxième extrait de la deuxième mémoire tampon, en fonction de la valeur de décalage moyen reçue ;
- analyse comparative du premier extrait et du deuxième extrait afin d'en déduire une valeur de décalage réel entre le premier flux et le deuxième flux ;
- synchronisation du premier flux et du deuxième flux en fonction de la valeur de décalage réel obtenue.

Il est ainsi rendu possible de synchroniser un flux IP avec un flux diffusé, tel qu'un flux FM ou RNT/DAB, ou encore DRM (pour Digital Radio Mondiale) ou HD Radio, permettant ainsi de basculer d'un flux à un autre de manière transparente pour l'utilisateur sans engendrer de répétition ou de perte de données.

Selon un mode de réalisation, les étapes précédentes sont mises en œuvre durant une restitution du premier flux, et le procédé comprend en outre, suite à la synchronisation du premier flux et du deuxième flux, une étape de basculement de la restitution du premier flux vers une restitution du deuxième flux.

On entend par restitution toute transposition d'un flux en données sonores (flux audio) ou sonores et vidéo (flux vidéo) à l'intention de l'utilisateur du récepteur.

Ainsi, la synchronisation est mise en œuvre alors même que l'un des flux est restitué à l'utilisateur, et un basculement d'un flux à un autre peut ainsi être opéré à n'importe quel moment de manière transparente pour l'utilisateur.

En complément, la restitution du premier flux et du deuxième flux peut comprendre l'ajout d'échantillons de la première mémoire tampon ou de la deuxième mémoire tampon à une mémoire tampon de restitution.

En complément, si le premier flux est en avance sur le second flux, la synchronisation du premier flux et du deuxième flux comprend le retardement du premier flux restitué par l'ajout d'échantillons dans la mémoire tampon de restitution, jusqu'à ce que le retardement introduit soit égal à la valeur de décalage réel entre le premier flux et le deuxième flux.

Ainsi, la synchronisation entre les flux peut être opérée lorsque le premier flux est en avance sur le second flux, par exemple lorsque le premier flux est un flux diffusé de type FM ou RNT/DAB et lorsque le deuxième flux est un flux IP. L'introduction d'échantillons étant pas ou peu perceptible par l'utilisateur, la qualité du flux restitué n'est pas dégradée durant la synchronisation.

En variante, si le premier flux est en avance sur le second flux, la synchronisation du premier flux et du deuxième flux comprend une diminution d'une fréquence de lecture de la mémoire tampon de restitution, jusqu'à ce qu'un retardement introduit soit égal à la valeur de décalage réel entre le premier flux et le deuxième flux.

Ainsi, la synchronisation entre les flux peut être opérée lorsque le premier flux est en avance sur le second flux, par exemple lorsque le premier flux est un flux diffusé de type FM ou RNT/DAB et lorsque le deuxième flux est un flux IP. Le flux restitué est légèrement ralenti (par exemple, la fréquence de sortie de la mémoire tampon de restitution peut être diminuée de 48 kHz à 47 kHz) de manière peu perceptible pour l'utilisateur.

En variante, si le premier flux est en retard sur le second flux, la synchronisation du premier flux et du deuxième flux comprend le déplacement d'un curseur de lecture de la deuxième mémoire tampon d'un nombre d'échantillons correspondant à la valeur de décalage réel entre le premier flux et le deuxième flux, et les échantillons de la deuxième mémoire tampon ajoutés dans la mémoire tampon de restitution peuvent être indiqués par le curseur de lecture déplacé.

Ainsi, la synchronisation entre les flux peut être opérée lorsque le premier flux est en retard sur le second flux, par exemple lorsque le premier flux est un flux IP et lorsque le deuxième flux est un flux diffusé de type FM ou RNT/DAB.

Selon un mode de réalisation, les étapes d'extraction, d'analyse comparative et de synchronisation sont mises en œuvre suite à une étape de détection qu'une qualité de réception du premier flux est inférieure à un premier seuil prédéterminé.

Ainsi, la synchronisation peut anticiper un futur basculement probable d'un flux à l'autre du fait de la dégradation de la qualité du flux en cours de restitution.

En complément, le basculement d'une restitution du premier flux vers une restitution du deuxième flux est mis en œuvre suite à une étape de détection que la qualité de réception du premier flux est inférieure à un deuxième seuil prédéterminé, ledit deuxième seuil étant inférieur au premier seuil.

Ainsi, le basculement, peut être automatisé de manière à assurer la restitution d'un flux dont la qualité de réception est suffisante. Par exemple, la qualité de réception peut être mesurée par un indice de type ratio de signal à bruit.

En variante, le basculement peut être mis en œuvre suite à une étape de réception d'une commande de basculement du premier flux vers le deuxième flux depuis une interface de sélection utilisateur.

Ainsi, l'utilisateur peut avantageusement choisir l'un ou l'autre des flux sans que le basculement n'impacte la continuité de la restitution du service.

Selon un mode de réalisation, la valeur de décalage moyen est reçue depuis une plateforme de service, via le réseau IP.

Ainsi, la plateforme de service peut avoir connaissance de valeurs de décalage moyen entre les différents flux d'un même service, et peut en informer le récepteur afin qu'il puisse mettre en œuvre la synchronisation des flux.

En complément, le procédé peut comprendre en outre une étape préalable d'envoi à la plateforme de service d'une requête, la requête identifiant le service transporté par les premier et deuxième flux.

Ainsi, la plateforme de service envoie la valeur de décalage moyen uniquement sur requête du récepteur ce qui réduit l'encombrement dans le réseau transportant la requête et la valeur de décalage moyen.

En complément, la requête peut identifier en outre une localisation du récepteur, et le procédé peut comprendre en outre la réception, depuis la plateforme de service d'un URL pour l'accès via le réseau IP au service correspondant à la localisation du récepteur.

Ainsi, même dans le cas de la réception de flux diffusés dans le cadre d'un service local, dépendant de la localisation du récepteur, le flux IP reçu peut véhiculer le même contenu, ce qui permet une continuité de services en cas de basculement d'un flux à un autre.

Selon un mode de réalisation de l'invention, la valeur de décalage moyen est reçue cycliquement depuis la plateforme de service.

Ainsi, la plateforme de service peut mettre à jour régulièrement les valeurs de décalage moyen ce qui permet une synchronisation fine des flux d'un même service.

Un deuxième aspect de l'invention concerne un produit programme d'ordinateur comprenant des instructions de code de programme enregistrées sur un support lisible par un ordinateur, pour l'exécution des étapes du procédé selon le premier aspect de l'invention.

Un deuxième aspect de l'invention concerne un récepteur pour la synchronisation d'un premier flux de données et d'un deuxième flux de données, au moins un flux parmi le premier flux et le deuxième flux étant reçu par diffusion radiofréquence et l'autre flux étant reçu via un réseau IP, les premier et deuxième flux transportant un même service, ledit récepteur comprenant :
- une interface de réception d'une valeur de décalage moyen entre le premier flux et le deuxième flux ;
- au moins une première mémoire tampon pour stocker le premier flux et une deuxième mémoire tampon pour stocker le deuxième flux ;
- un module de calcul comprenant un processeur configuré pour extraire un premier extrait de la première mémoire tampon et un deuxième extrait de la deuxième mémoire tampon, en fonction de la valeur de décalage moyen reçue, et pour procéder à une analyse comparative du premier extrait et du deuxième extrait afin d'en déduire une valeur de décalage réel entre le premier flux et le deuxième flux ;
- un module de synchronisation comprenant un processeur configuré pour synchroniser le premier flux et le deuxième flux en fonction de la valeur de décalage réel obtenue.

D'autres caractéristiques et avantages de l'invention apparaîtront à l'examen de la description détaillée ci-après, et des dessins annexés sur lesquels:
- la figure 1 illustre un système de synchronisation de flux de données selon un mode de réalisation de l'invention ;
- la figure 2 est un diagramme illustrant les étapes d'un procédé de synchronisation de flux de données selon un mode de réalisation de l'invention.

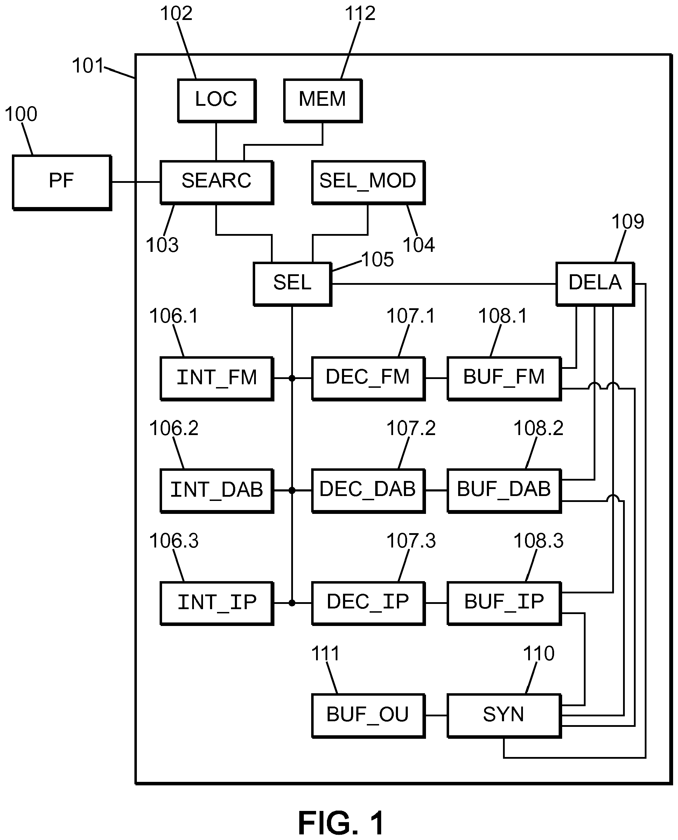

La figure 1 présente un système de synchronisation selon un mode de réalisation de l'invention.

Le système comprend une plateforme de service 100 apte à communiquer avec un récepteur audio/vidéo 101. Le récepteur audio/vidéo 101 peut par exemple accéder à la plateforme de service 100 via un réseau IP, de type Internet par exemple.

Dans la suite de la description, l'exemple d'un récepteur radio est considéré, à titre illustratif uniquement. On comprendra que l'invention s'applique indifféremment à la réception de données vidéo.

Le récepteur radio 101 comprend un module de localisation 102, de type GPS, pour « *Global Positioning System* » par exemple, apte à obtenir des données de localisation du récepteur 101. Par exemple, lorsque le récepteur radio 101 est un autoradio ou un Smartphone, une fonction GPS est généralement disponible. De manière alternative, le récepteur radio 101 peut être localisé en exploitant la liste de programmes de type « *broadband* » disponibles ou en détectant une station radio FM ou DAB locale.

Le récepteur radio 101 comprend en outre un module de recherche 103 apte à déterminer, en fonction de la localisation du récepteur radio 101, l'ensemble des services diffusés disponibles pour le récepteur radio 101. A cet effet, le module de recherche 103 peut balayer l'ensemble des bandes de fréquences qu'il prend en charge ainsi que l'ensemble des modulations (par exemple AM, FM, DAB, DRM). En outre, une fois la liste des services diffusés créée, le module de recherche 103 est apte à déterminer si un accès au réseau IP est disponible ou non (par l'intermédiaire d'un réseau mobile, ou d'une borne Wi-fi par exemple).

Dans le cas où un accès au réseau IP est disponible, le module de recherche peut obtenir des URL associés aux services diffusés disponibles de la liste auprès de la plateforme de service 100. Selon une réalisation, seul l'URL associé au service en cours de restitution sur le récepteur radio 101 est transmis par la plateforme de service 100, suite à la réception d'une requête identifiant le service en cours de diffusion. En variante, sur réception d'une requête depuis le récepteur radio 101, la requête identifiant l'ensemble des services disponibles pour le récepteur radio 101, la plateforme de service 100 transmet l'ensemble des URLs associés aux services disponibles, ce qui permet de limiter le nombre de requêtes dans le réseau IP. En outre, le récepteur radio 101 peut transmettre, via une requête, un identifiant de sa localisation (des coordonnées GPS par exemple), à la plateforme de service, de manière à ce que les URL reçus permettent l'accès à un service local correspondant à la localisation identifié.

La liste de services diffusés disponibles peut en outre être enrichie en y ajoutant des services uniquement disponibles par voie IP, tels que des services liés à la localisation du récepteur radio 101.

En outre, le module de recherche 103 peut obtenir de la plateforme de service 100 des valeurs de décalage moyen. A cet effet, le module de recherche 103 peut intégrer une interface permettant de communiquer avec le module de recherche 103. L'interface en question peut être groupée avec une interface IP 106.3 décrite ci-après, dans le cas où la plateforme de service 100 est accessible via un réseau IP.

Par exemple, le module de recherche 103 peut obtenir :
- une première valeur de décalage moyen entre la diffusion FM d'un premier service et la transmission via le réseau IP du même premier service ;
- une deuxième valeur de décalage moyen entre la diffusion DAB du premier service et la transmission via le réseau IP du même premier service.

Les valeurs de décalage moyen peuvent être transmises par la plateforme de service 100 pour un ensemble de services donné, de manière régulière, selon une première fréquence.

L'utilisation du décalage moyen du côté du récepteur permet entre autres :
- d'initialiser les mémoires tampons de stockage des échantillons 'audio à des tailles respectives appropriées et de permettre au récepteur radio de vérifier qu'il dispose des ressources suffisantes ;
- de limiter les plages audio à utiliser pour réaliser la synchronisation fine et ainsi de limiter les ressources processeur nécessaires pour réaliser la synchronisation ;
- de décider quel ou quels flux audio doivent être ralentis relativement à un autre flux audio, avant que la valeur de décalage réel ne soit connue (cela est impossible si le calcul du décalage est effectué uniquement du côté du récepteur) ;
- de privilégier le démarrage de la lecture de l'audio sur le flux le plus en retard afin de faciliter la synchronisation (il n'est alors pas nécessaire de ralentir l'un des flux) ;
- de réaliser une synchronisation approximative (de manière alternative, sans utiliser de synchronisation fine mettant en œuvre le calcul de la valeur de décalage réel) ce qui limite les ressources processeur nécessaire dans le récepteur.

De manière alternative, les valeurs de décalage moyen sont transmises par la plateforme de service 100 suite à la réception d'une requête de la part du module de recherche 103.

En variante, le module de recherche 103 identifie dans la requête le service en cours de restitution sur le récepteur radio 101. Ainsi, la plateforme de service 100 peut transmettre uniquement les valeurs de décalage moyen relatives au service en cours de restitution, limitant ainsi la charge dans le réseau IP.

Les données transmises par la plateforme de service 100 peuvent être chiffrées afin d'éviter la transmission d'informations modifiées.

Le récepteur 101 peut comprendre une mémoire de stockage 112 pour stocker notamment les valeurs de décalage moyen et les URLs reçus depuis la plateforme de service 100.

Le récepteur 101 peut comprendre en outre une interface de sélection utilisateur 104, telle qu'une interface utilisateur permettant la sélection d'un service parmi la liste des services disponibles, et permettant optionnellement de sélectionner l'un des flux correspondant au service (flux DAB, flux IP, flux FM, etc).

Aucune restriction n'est attachée à l'interface de sélection, qui peut être un écran tactile ou qui peut comprendre un ensemble de boutons.

Le récepteur radio 101 peut comprendre en outre un module de sélection de source 105. Le module de sélection de source 101, sur la base du service sélectionné par l'utilisateur via l'interface de sélection utilisateur 104, peut sélectionner l'un des flux correspondants au service. Par exemple, si le flux courant en cours de restitution est un flux IP, mais que la couverture réseau IP diminue (qualité de signal inférieure à un seuil prédéterminé par exemple), le module de sélection de source 101 peut initier un basculement vers une autre source (flux DAB ou FM). Inversement, lorsque le flux courant est un flux diffusé (DAB ou FM) et qu'une qualité du signal est inférieure à un seuil th₁, un basculement vers le flux IP peut être initié par le module de sélection de source 105. La qualité de réception peut être mesurée par un indice de type ratio signal à bruit SNR.

En variante, lorsque l'utilisateur a sélectionné un flux via l'interface de sélection utilisateur 104, le flux sélectionné par l'utilisateur est sélectionné par le module de sélection de source 105.

Le module de sélection de source 105 est en outre apte à configurer une interface FM 106.1, une interface DAB 106.2 et une interface IP 106.3 afin qu'elles reçoivent des flux respectifs correspondant au service sélectionné. Afin de ne pas recevoir le flux IP en permanence (limitation des coûts et de consommation de batterie par exemple), et lorsque le flux courant en cours de restitution est un flux diffusé (flux DAB ou FM), le module de sélection de source 15 peut activer l'interface IP 106.3 uniquement lorsqu'une qualité de réception du signal DAB ou FM est inférieure à un seuil th₂, avec th₂ supérieur à th₁.

En outre, sur la base des valeurs de décalage moyen reçues depuis la plateforme de service 100, le module de sélection de source 105 peut adapter une taille de mémoires tampon 108.1, 108.2 et 108.3.

Une mémoire tampon FM 108.1 est apte à stocker temporairement des échantillons audio issus d'un décodeur FM 107.1 recevant le flux FM de l'interface FM 106.1.

Une mémoire tampon DAB 108.2 est apte à stocker temporairement des échantillons audio issus d'un décodeur DAB 107.2 recevant le flux DAB de l'interface DAB 106.2.

Une mémoire tampon IP 108.3 est apte à stocker temporairement des échantillons audio issus d'un décodeur IP 107.3 recevant le flux IP de l'interface IP 106.3.

Le décodeur FM 107.1 est apte à décoder le service sélectionné en réception FM et à fournir en sortie des échantillons audio décodés, par exemple au format PCM (pour « *Pulse Code Modulation* » en anglais).

Le décodeur DAB 107.2 est apte à décoder le service sélectionné en réception DAB et à fournir en sortie des échantillons audio décodés, par exemple au format PCM.

Le décodeur IP 107.3 est apte à décoder le service sélectionné en réception IP et à fournir en sortie des échantillons audio décodés, par exemple au format PCM.

Les mémoires tampon 108.1 à 108.3 peuvent stocker des échantillons audio décodés sur une profondeur suffisante pour permettre une resynchronisation des différents flux du service sélectionné. Les profondeurs (ou tailles) des mémoires tampon sont déterminées en fonction des valeurs de décalage moyen reçus de la plateforme de service 100. Par exemple, si un décalage moyen Δ est indiqué entre les flux FM et IP d'un même service, le flux FM étant en avance sur le flux IP, la taille de la mémoire tampon FM 108.1 peut être augmentée à un nombre d'échantillons au moins égal à la taille de la mémoire tampon IP 108.3 plus la valeur du décalage moyen Δ.

Le récepteur audio 101 comprend en outre un module de calcul 109 apte à déterminer au moins une valeur de décalage réel entre deux flux d'un même service. A cet effet, un premier extrait audio (un ensemble d'échantillons) d'une première mémoire tampon et un deuxième extrait audio d'une deuxième mémoire tampon peuvent être comparés afin de déduire une valeur de décalage réel.

L'extraction du premier extrait audio et du deuxième audio prend en compte la valeur de décalage moyen entre les flux dont ils sont issus, comme il sera mieux compris dans ce qui suit.

De manière avantageuse, le premier extrait audio et le deuxième audio comprennent le même nombre k d'échantillons, ou un nombre d'échantillons proches (par exemple, si le premier extrait audio comprend n échantillons, le deuxième extrait audio en comprend m, avec 0,9*n<m<1,1*n), ce qui réduit la complexité de la comparaison par le module de calcul 109.

A titre d'exemple, dans le cas d'une synchronisation d'un flux IP et d'un flux FM d'un même service, la valeur de décalage moyen entre ces flux, transmise par la plateforme de service 100, peut indiquer que le flux FM est en avance de n secondes sur le flux IP. La durée de n secondes peut être convertie en un nombre M d'échantillons à partir de la fréquence d'échantillonnage des décodeurs FM et IP 107.1 et 107.3.

A partir du nombre M d'échantillons correspondant à la valeur de décalage moyen, un curseur de lecture peut être déplacé dans l'une des mémoires tampon.

Par exemple, dans l'exemple ci-dessus où le flux FM est en avance sur le flux IP, les k échantillons suivant l'échantillon d'indice M sont ainsi extraits de la mémoire tampon FM 107.1 et les k premiers échantillons IP sont extraits de la mémoire tampon IP 107.2, afin de comparer ces extraits dans le module de calcul 109 et de déduire de la comparaison la valeur de décalage réel entre le flux IP et le flux FM.

La valeur de décalage réel indique ainsi le décalage réel entre deux flux d'un même service à l'échantillon près.

Le récepteur audio 101 comprend en outre un module de synchronisation 110 apte à prendre en entrée les mémoires tampon 108.1 à 108.3 des différentes sources (flux d'un même service) et à construire un flux de sortie stocké dans une mémoire tampon de restitution 111, par ajout d'échantillons des mémoires tampon 108.1 à 108.3 à la mémoire tampon de restitution 111.

Le module de synchronisation 110 est apte notamment à synchroniser un premier flux et un deuxième flux, sur la base de la valeur de décalage réel reçue depuis le module de calcul 109, en vue du basculement d'une restitution du premier flux à une restitution du deuxième flux, et ce, sans dégradation du service lors de la bascule d'une source à l'autre.

Par exemple, lorsque le premier flux est en avance sur le deuxième flux (par exemple le premier flux est un flux FM tandis que le deuxième flux est un flux IP), le module de synchronisation 110 peut retarder le flux audio en sortie de la mémoire tampon de restitution 111, par exemple :
- en ajoutant des échantillons dans la mémoire tampon de restitution 111, en plus des échantillons issus de la mémoire tampon du premier flux, jusqu'à ce que le retardement introduit soit égal à la valeur de décalage réel entre le premier flux en cours de restitution et le deuxième flux ;
- en diminuant une fréquence de lecture de la mémoire tampon de restitution 111, jusqu'à ce qu'un retardement introduit soit égal à la valeur de décalage réel entre le premier flux et le deuxième flux.
Lorsque le premier flux en cours de restitution est en retard sur le deuxième flux (par exemple le premier flux est le flux IP et le deuxième flux est un flux diffusé) la synchronisation du premier flux et du deuxième flux comprend le déplacement d'un curseur de lecture de la deuxième mémoire tampon du deuxième flux d'un nombre d'échantillons correspondant à la valeur de décalage réel entre le premier flux et le deuxième flux. Ainsi, les échantillons de la deuxième mémoire tampon ajoutés dans la mémoire tampon de restitution 111 sont indiqués par le curseur de lecture déplacé.

Une fois les premier et deuxième flux synchronisés, le module de synchronisation 110 peut basculer du premier flux au deuxième flux en alimentant la mémoire tampon de restitution 111 avec des échantillons issus du deuxième flux.

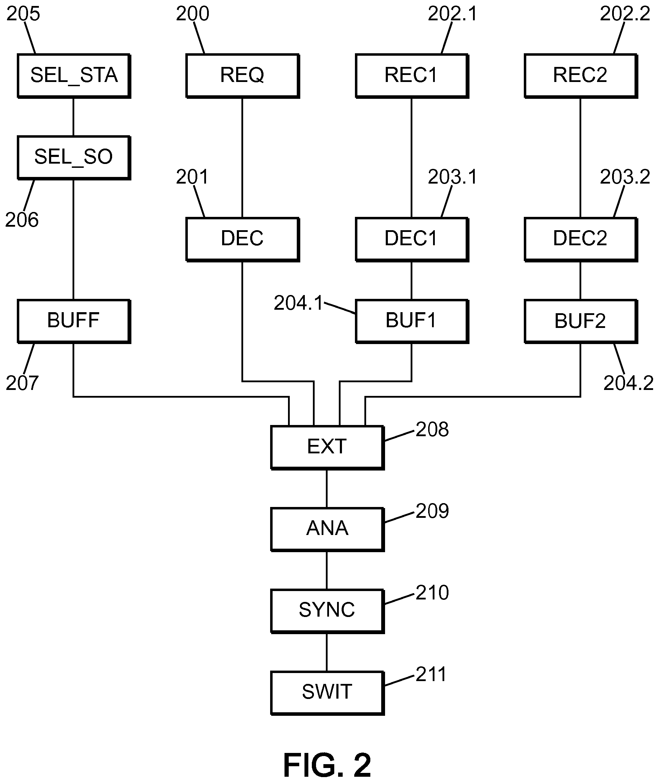

La figure 2 est un diagramme illustrant les étapes d'un procédé de synchronisation selon un mode de réalisation de l'invention.

A une étape 200 optionnelle, le module de recherche 103 envoie une requête pour requérir les valeurs de décalage moyen, comme décrit ci-dessus.

A une étape 201, la plateforme de service 100 envoie les valeurs de décalage moyen au récepteur audio 101. L'étape 200 n'est pas mise en œuvre dans le mode de réalisation dans lequel l'étape 201 est mise en œuvre de manière cyclique. En outre, à l'étape 201, le récepteur audio peut recevoir, de la plateforme de service 100, un URL permettant d'accéder à un flux IP correspondant à un service en cours de restitution (via un flux DAB ou FM) sur le récepteur radio 101, ou une liste d'URL permettant d'accéder à des flux IP correspondant respectivement aux services accessibles par le récepteur audio 101.

En parallèle des étapes 200 et 201, le récepteur audio 101 reçoit un premier flux à une étape 202.1 et deuxième flux à une étape 202.2. Comme précédemment expliqué, les premier et deuxième flux sont reçus par des interfaces 106.1 à 106.3 distinctes et correspondent à un même service (une même station radio par exemple). Les premier et deuxième flux sont respectivement décodés par deux des décodeurs 107.1 à 107.3 à des étapes 203.1 et 203.2, puis stockés dans deux des mémoires tampon 108.1 à 108.3 à des étapes 204.1 et 204.2. Les étapes 202 à 204 sont mises en œuvre de manière continue.

Comme indiqué précédemment, la réception d'un flux IP peut être conditionnée par une comparaison entre une valeur de qualité de réception d'un flux diffusé (DAB ou FM) en cours de restitution et le seuil th₂.

A une étape 205, en parallèle des étapes 200 à 204 décrites ci-dessus, l'utilisateur peut sélectionner un service via l'interface de sélection utilisateur 104. Lorsque l'utilisateur souhaite basculer d'un service à un nouveau service (d'une station radio à une autre par exemple), les interfaces 106.1 à 106.3 sont reconfigurées pour recevoir le nouveau service.

A une étape 206, le module de sélection de source 105 configure les interfaces FM 106.1, DAB 106.2 et IP 106.3 afin qu'elles reçoivent des flux respectifs correspondant au service sélectionné, et sélectionne l'un des flux. La sélection d'un flux peut être déterminée à partir d'une sélection de l'utilisateur via l'interface de sélection utilisateur 104, ou peut être opéré soit par défaut, soit en fonction de qualités de réceptions des flux respectifs, notamment dans le cadre du basculement d'un premier flux à un deuxième flux. Dans ce qui suit, on considère l'exemple d'un basculement d'un premier flux à un deuxième flux.

A une étape 207 optionnelle, le module de sélection de source 105 peut adapter une taille de mémoires tampon 108.1, 108.2 et 108.3 sur la base de la valeur de décalage moyen relative aux premier et deuxième flux et reçue depuis la plateforme de service 100 à l'étape 200, comme précédemment décrit.

A une étape 208, le module de calcul 109 extrait un premier extrait audio et un deuxième extrait audio des mémoires tampon stockant les premier et deuxième flux à synchroniser, en fonction de la valeur de décalage reçue relative aux premier et deuxième flux.

A une étape 209, le module de calcul 109 procède à une analyse comparative du premier extrait et du deuxième extrait afin d'en déduire une valeur de décalage réel entre les premier et deuxième flux.

A une étape 210, les premier et deuxième flux sont synchronisés par le module de synchronisation 110 sur la base de la valeur de décalage réel calculée par le module de calcul 109, comme précédemment détaillé.

A une étape 111, le module de synchronisation 110, une fois les premier et deuxième flux synchronisés, bascule du premier au deuxième flux, en alimentant la mémoire tampon de restitution 111 afin des échantillons de la deuxième mémoire tampon stockant le deuxième flux, comme précédemment expliqué.

Le module de synchronisation 110, le module de sélection de source 105 et le module de calcul 109 peuvent chacun comprendre un processeur et une mémoire interne, pour la mise en œuvre des étapes ci-dessus.

Le diagramme de la figure 2 illustre également un organigramme d'instructions de code comprises dans un produit programme d'ordinateur et enregistrées sur un support lisible par ordinateur.

## Revendications

1. Procédé de synchronisation d'un premier flux de données et d'un deuxième flux de données mis en œuvre dans un récepteur (101), au moins un flux parmi le premier flux et le deuxième flux étant reçu par diffusion radiofréquence et l'autre flux étant reçu via un réseau IP, les premier et deuxième flux transportant un même service, ledit procédé comprenant :
- réception (201) d'une valeur de décalage moyen entre le premier flux et le deuxième flux ;
- stockage (204.1 ;204.2) du premier flux dans une première mémoire tampon (108.1-108.3) et stockage du deuxième flux dans une deuxième mémoire tampon (108.1-108.3) ;
- extraction (208) d'un premier extrait de la première mémoire tampon et d'un deuxième extrait de la deuxième mémoire tampon, en fonction de la valeur de décalage moyen reçue ;
- analyse comparative (209) du premier extrait et du deuxième extrait afin d'en déduire une valeur de décalage réel entre le premier flux et le deuxième flux ;
- synchronisation (210) du premier flux et du deuxième flux en fonction de la valeur de décalage réel obtenue.

2. Procédé de synchronisation selon la revendication 1, dans lequel les étapes précédentes sont mises en œuvre durant une restitution du premier flux, ledit procédé comprenant en outre, suite à la synchronisation (210) du premier flux et du deuxième flux, une étape de basculement (211) de la restitution du premier flux vers une restitution du deuxième flux.

3. Procédé selon la revendication 2, dans lequel la restitution du premier flux et du deuxième flux comprend l'ajout d'échantillons de la première mémoire tampon ou de la deuxième mémoire tampon à une mémoire tampon de restitution (111).

4. Procédé selon la revendication 3, dans lequel, si le premier flux est en avance sur le second flux, la synchronisation (210) du premier flux et du deuxième flux comprend le retardement du premier flux restitué par l'ajout d'échantillons dans la mémoire tampon de restitution, jusqu'à ce que le retardement introduit soit égal à la valeur de décalage réel entre le premier flux et le deuxième flux.

5. Procédé selon la revendication 3, dans lequel, si le premier flux est en avance sur le second flux, la synchronisation (210) du premier flux et du deuxième flux comprend une diminution d'une fréquence de lecture de la mémoire tampon de restitution, jusqu'à ce qu'un retardement introduit soit égal à la valeur de décalage réel entre le premier flux et le deuxième flux.

6. Procédé selon la revendication 3, dans lequel, si le premier flux est en retard sur le second flux, la synchronisation (210) du premier flux et du deuxième flux comprend le déplacement d'un curseur de lecture de la deuxième mémoire tampon d'un nombre d'échantillons correspondant à la valeur de décalage réel entre le premier flux et le deuxième flux,
dans lequel les échantillons de la deuxième mémoire tampon ajoutés dans la mémoire tampon de restitution sont indiqués par le curseur de lecture déplacé.

7. Procédé selon l'une des revendications 1 à 6, dans lequel les étapes d'extraction (208), d'analyse comparative (209) et de synchronisation (210) sont mises en œuvre suite à une étape de détection qu'une qualité de réception du premier flux est inférieure à un premier seuil prédéterminé.

8. Procédé selon les revendications 2 et 7, dans lequel le basculement (211) d'une restitution du premier flux vers une restitution du deuxième flux est mis en œuvre suite à une étape de détection que la qualité de réception du premier flux est inférieure à un deuxième seuil prédéterminé, ledit deuxième seuil étant inférieur au premier seuil.

9. Procédé selon l'une des revendications 2 à 6, dans lequel le basculement (211) est mis en œuvre suite à une étape de réception d'une commande de basculement du premier flux vers le deuxième flux depuis une interface de sélection utilisateur (104).

10. Procédé selon l'une des revendications précédentes, dans lequel la valeur de décalage moyen est reçue depuis une plateforme de service (100), via le réseau IP.

11. Procédé selon la revendication 10, comprenant en outre une étape préalable d'envoi (200) à la plateforme de service d'une requête, ladite requête identifiant le service transporté par les premier et deuxième flux.

12. Procédé selon la revendication 11, dans lequel la requête identifie en outre une localisation du récepteur, et comprenant en outre la réception, depuis la plateforme de service d'un URL pour l'accès via le réseau IP au service correspondant à la localisation du récepteur.

13. Procédé selon la revendication 10, dans lequel la valeur de décalage moyen est reçue cycliquement depuis la plateforme de service.

14. Produit programme d'ordinateur comprenant des instructions de code de programme enregistrées sur un support lisible par un ordinateur, pour l'exécution des étapes du procédé selon l'une quelconque des revendications 1 à 13.

15. Récepteur pour la synchronisation d'un premier flux de données et d'un deuxième flux de données, au moins un flux parmi le premier flux et le deuxième flux étant reçu par diffusion radiofréquence et l'autre flux étant reçu via un réseau IP, les premier et deuxième flux transportant un même service, ledit récepteur (101) comprenant :
- une interface de réception (103) d'une valeur de décalage moyen entre le premier flux et le deuxième flux ;
- au moins une première mémoire tampon (108.1-108.3) pour stocker le premier flux et une deuxième mémoire tampon (108.1-108.3) pour stocker le deuxième flux ;
- un module de calcul (109) comprenant un processeur configuré pour extraire un premier extrait de la première mémoire tampon et un deuxième extrait de la deuxième mémoire tampon, en fonction de la valeur de décalage moyen reçue, et pour procéder à une analyse comparative du premier extrait et du deuxième extrait afin d'en déduire une valeur de décalage réel entre le premier flux et le deuxième flux ;
- un module de synchronisation (110) comprenant un processeur configuré pour synchroniser le premier flux et le deuxième flux en fonction de la valeur de décalage réel obtenue.

## Patentansprüche

1. Verfahren zur Synchronisation eines ersten Datenstroms und eines zweiten Datenstroms, das in einem Empfänger (101) implementiert wird, wobei wenigstens ein Datenstrom aus erstem Datenstrom und zweitem Datenstrom durch Funkübertragung empfangen wird und der andere Datenstrom über ein IP-Netzwerk empfangen wird, wobei der erste und der zweite Datenstrom den gleichen Dienst übertragen, wobei das Verfahren umfasst:
- Empfangen (201) eines Wertes des durchschnittlichen Offsets zwischen dem ersten Datenstrom und dem zweiten Datenstrom;
- Speichern (204.1; 204.2) des ersten Datenstroms in einem ersten Pufferspeicher (108.1-108.3) und Speichern des zweiten Datenstroms in einem zweiten Pufferspeicher (108.1-108.3);
- Abrufen (208) eines ersten Auszugs aus dem ersten Pufferspeicher und eines zweiten Auszugs aus dem zweiten Pufferspeicher, basierend auf dem empfangenen Wert des durchschnittlichen Offsets;
- vergleichende Analyse (209) des ersten Auszugs und des zweiten Auszugs, um daraus einen Wert des tatsächlichen Offsets zwischen dem ersten Datenstrom und dem zweiten Datenstrom abzuleiten;
- Synchronisation (210) des ersten Datenstroms und des zweiten Datenstroms basierend auf dem erhaltenen Wert des tatsächlichen Offsets.

2. Synchronisationsverfahren nach Anspruch 1, wobei die vorhergehenden Schritte während einer Wiederherstellung des ersten Datenstroms durchgeführt werden, wobei das Verfahren ferner im Anschluss an die Synchronisation (210) des ersten Datenstroms und des zweiten Datenstroms einen Schritt des Umschaltens (211) von der Wiederherstellung des ersten Datenstroms zu einer Wiederherstellung des zweiten Datenstroms umfasst.

3. Verfahren nach Anspruch 2, wobei die Wiederherstellung des ersten Datenstroms und des zweiten Datenstroms das Hinzufügen von Proben aus dem ersten Pufferspeicher oder dem zweiten Pufferspeicher zu einem Wiederherstellungspufferspeicher (111) umfasst.

4. Verfahren nach Anspruch 3, wobei, wenn der erste Datenstrom vor dem zweiten Datenstrom liegt, die Synchronisation (210) des ersten Datenstroms und des zweiten Datenstroms das Verzögern des wiederhergestellten ersten Datenstroms durch Hinzufügen von Proben zum Wiederherstellungspufferspeicher umfasst, bis die eingeführte Verzögerung gleich dem Wert des tatsächlichen Offsets zwischen dem ersten Datenstrom und dem zweiten Datenstrom ist.

5. Verfahren nach Anspruch 3, wobei, wenn der erste Datenstrom vor dem zweiten Datenstrom liegt, die Synchronisation (210) des ersten Datenstroms und des zweiten Datenstroms eine Verringerung der Lesefrequenz des Wiederherstellungspufferspeichers umfasst, bis eine eingeführte Verzögerung gleich dem Wert des tatsächlichen Offsets zwischen dem ersten Datenstrom und dem zweiten Datenstrom ist.

6. Verfahren nach Anspruch 3, wobei, wenn der erste Datenstrom gegenüber dem zweiten Datenstrom verzögert ist, die Synchronisation (210) des ersten Datenstroms und des zweiten Datenstroms das Bewegen eines Lesecursors des zweiten Pufferspeichers um eine Anzahl von Proben umfasst, die dem Wert des tatsächlichen Offsets zwischen dem ersten Datenstrom und dem zweiten Datenstrom entspricht,
wobei die Proben des zweiten Pufferspeichers, die dem Wiederherstellungspufferspeicher hinzugefügt werden, durch den bewegten Lesecursor angezeigt werden.

7. Verfahren nach einem der Ansprüche 1 bis 6, wobei die Schritte des Abrufens (208), des Vergleichens (209) und der Synchronisation (210) nach einem Schritt des Erkennens, dass eine Empfangsqualität des ersten Datenstroms unter einem ersten vorbestimmten Schwellenwert liegt, implementiert werden.

8. Verfahren nach einem der Ansprüche 2 und 7, wobei das Umschalten (211) von einer Wiederherstellung des ersten Datenstroms zu einer Wiederherstellung des zweiten Datenstroms nach einem Schritt des Erkennens, dass die Empfangsqualität des ersten Datenstroms unter einem vorbestimmten zweiten Schwellenwert liegt, implementiert wird, wobei der zweite Schwellenwert unter dem ersten Schwellenwert liegt.

9. Verfahren nach einem der Ansprüche 2 bis 6, wobei das Umschalten (211) nach einem Schritt des Empfangs eines Befehls zum Umschalten des ersten Datenstroms auf den zweiten Datenstrom von einer Benutzerauswahlschnittstelle (104) implementiert wird.

10. Verfahren nach einem der vorhergehenden Ansprüche, wobei der Wert des durchschnittlichen Offsets von einer Dienstplattform (100) über das IP-Netzwerk empfangen wird.

11. Verfahren nach Anspruch 10, das ferner einen vorherigen Schritt des Sendens (200) einer Anforderung an die Dienstplattform umfasst, wobei die Anforderung den Dienst identifiziert, der durch den ersten und zweiten Datenstrom transportiert wird.

12. Verfahren nach Anspruch 11, wobei die Anforderung ferner einen Standort des Empfängers identifiziert und ferner das Empfangen einer URL für den Zugriff über das IP-Netzwerk auf den Dienst, der dem Standort des Empfängers entspricht, von der Dienstplattform umfasst.

13. Verfahren nach Anspruch 10, wobei der Wert des durchschnittlichen Offsets zyklisch von der Dienstplattform empfangen wird.

14. Computerprogrammprodukt, umfassend auf einem computerlesbaren Medium gespeicherte Programmcodeanweisungen zur Durchführung der Schritte des Verfahrens nach einem der Ansprüche 1 bis 13.

15. Empfänger für die Synchronisation eines ersten Datenstroms und eines zweiten Datenstroms, wobei wenigstens ein Datenstrom aus erstem Datenstrom und zweitem Datenstrom durch Funkübertragung empfangen wird und der andere Datenstrom über ein IP-Netzwerk empfangen wird, wobei der erste und der zweite Datenstrom den gleichen Dienst übertragen, wobei der Empfänger (101) umfasst:
- eine Schnittstelle zum Empfangen (103) eines Wertes des durchschnittlichen Offsets zwischen dem ersten Datenstrom und dem zweiten Datenstrom;
- wenigstens einen ersten Pufferspeicher (108.1-108.3) zum Speichern des ersten Datenstroms und einen zweiten Pufferspeicher (108.1-108.3) zum Speichern des zweiten Datenstroms;
- ein Berechnungsmodul (109), das einen Prozessor umfasst, der derart konfiguriert ist, dass er einen ersten Auszug aus dem ersten Pufferspeicher und einen zweiten Auszug aus dem zweiten Pufferspeicher basierend auf dem empfangenen Wert des durchschnittlichen Offsets abruft und eine vergleichende Analyse des ersten Auszugs und des zweiten Auszugs durchführt, um einen Wert des tatsächlichen Offsets zwischen dem ersten Datenstrom und dem zweiten Datenstrom abzuleiten;
- ein Synchronisationsmodul (110), das einen Prozessor umfasst, der derart konfiguriert ist, dass er den ersten Datenstrom und den zweiten Datenstrom basierend auf dem erhaltenen Wert des tatsächlichen Offsets synchronisiert.

## Claims

1. A method for synchronising a first data stream and a second data stream implemented in a receiver (101), at least one stream of the first stream and the second stream being received by radio-frequency broadcasting and the other stream being received via an IP network, the first and second streams conveying the same service, said method comprising:
- reception (201) of an average shift value between the first stream and the second stream;
- storage (204.1; 204.2) of the first stream in a first buffer memory (108.1-108.3) and storage of the second stream in a second buffer memory (108.1-108.3);
- extraction (208) of a first extract from the first buffer memory and a second extract from the second buffer memory, based on the received average shift value;
- comparative analysis (209) of the first extract and the second extract in order to derive therefrom an actual shift value between the first stream and the second stream;
- synchronisation (210) of the first stream and the second stream based on the obtained actual shift value.

2. The synchronisation method according to claim 1, wherein the previous steps are implemented during a restitution of the first stream, said method further comprising, following the synchronisation (210) of the first stream and the second stream, a step of switchover (211) from the restitution of the first stream into a restitution of the second stream.

3. The method according to claim 2, wherein the restitution of the first stream and the second stream comprises the addition of samples of the first buffer memory or of the second buffer memory to a restitution buffer memory (111).

4. The method according to claim 3, wherein, if the first stream is in advance with respect to the second stream, the synchronisation (210) of the first stream and the second stream comprises delaying the first stream restituted by the addition of samples in the restitution buffer memory, until the introduced delay is equal to the actual shift value between the first stream and the second stream.

5. The method according to claim 3, wherein, if the first stream is in advance with respect to the second stream, the synchronisation (210) of the first stream and the second stream comprises a reduction of a read frequency of the restitution buffer memory, until an introduced delay is equal to the actual shift value between the first stream and the second stream.

6. The method according to claim 3, wherein, if the first stream is delayed with respect to the second stream, the synchronisation (210) of the first stream and the second stream comprises the displacement of a read cursor of the second buffer memory by a number of samples corresponding to the actual shift value between the first stream and the second stream,
wherein the samples of the second buffer memory added in the restitution buffer memory are indicated by the displaced read cursor.

7. The method according to one of claims 1 to 6, wherein the extraction (208), comparative analysis (209) and synchronisation (210) steps are implemented following a step of detecting that a reception quality of the first stream is lower than a predetermined first threshold.

8. The method according to claims 2 and 7, wherein the switchover (211) from a restitution of the first stream into a restitution of the second stream is implemented following a step of detecting that the reception quality of the first stream is lower than a predetermined second threshold, said second threshold being lower than the first threshold.

9. The method according to one of claims 2 to 6, wherein the switchover (211) is implemented following a step of receiving a command of switchover from the first stream into the second stream from a user selection interface (104).

10. The method according to one of the preceding claims, wherein the average shift value is received from a service platform (100), via the IP network.

11. The method according to claim 10, further comprising a prior step of sending (200) a query to the service platform, said query identifying the service conveyed by the first and second streams.

12. The method according to claim 11, wherein the query further identifies a location of the receiver, and further comprising the reception, from the service platform of an URL for access via the IP network to the service corresponding to the location of the receiver.

13. The method according to claim 10, wherein the average shift value is received cyclically from the service platform.

14. A computer program product comprising program code instructions recorded on a computer-readable medium, for the execution of the steps of the method according to any one of claims 1 to 13.

15. A receiver for the synchronisation of a first data stream and a second data stream, at least one stream of the first stream and the second stream being received by radio-frequency broadcasting and the other stream being received via an IP network, the first and second streams conveying the same service, said receiver (101) comprising:
- an interface for receiving (103) an average shift value between the first stream and the second stream;
- at least one first buffer memory (108.1-108.3) for storing the first stream and a second buffer memory (108.1-108.3) for storing the second stream;
- a computation module (109) comprising a processor configured to extract a first extract from the first buffer memory and a second extract from the second buffer memory, based on the received average shift value, and to proceed with a comparative analysis of the first extract and the second extract in order to derive therefrom an actual shift value between the first stream and the second stream;
- a synchronisation module (110) comprising a processor configured to synchronise the first stream and the second stream based on the obtained actual shift value.
